(19)

Europäisches Patentamt

European Patent Office

Office européen des brevets

(11) **EP 2 154 837 B1**

(12) **EUROPEAN PATENT SPECIFICATION**

(45) Date of publication and mention of the grant of the patent:
**25.06.2014 Bulletin 2014/26**

(51) Int Cl.:
**H04L 12/825** (2013.01)   **H04W 28/10** (2009.01)

(21) Application number: **09010377.1**

(22) Date of filing: **12.08.2009**

(54) **Method of reducing the congestion in the lub interface in UTRAN networks according to user prioritization**

Verfahren zur Minderung von Überlastungen in der Iub-Schnittstelle in UTRAN Netzwerken gemäß der Priorisierung der Nutzer

Procédé de réduction dela congestion de l'interface lub dans des réseaux UTRAN en fonction de la priorisation des utilisateurs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.08.2008  ES 200802439**

(43) Date of publication of application:
**17.02.2010  Bulletin 2010/07**

(73) Proprietors:
• **Vodafone Group PLC**
 **Newbury**
 **Berkshire RG14 2FN (GB)**
• **Vodafone España, S.A.U.**
 **28108 Alcobendas, Madrid (ES)**

(72) Inventors:
• **Garriga Muñiz, Beatriz**
 **28020 Madrid (ES)**

• **Dominguez Romero, Francisco Javier**
 **28020 Madrid (ES)**
• **Tenorio Sanz, Santiago**
 **28020 Madrid (ES)**

(74) Representative: **Boult Wade Tennant**
 **Verulam Gardens**
 **70 Gray's Inn Road**
 **London WC1X 8BT (GB)**

(56) References cited:
 **EP-A1- 1 331 768   EP-A1- 1 672 845**
 **EP-A1- 1 770 918   EP-A1- 1 771 023**

• **SUDHIR DIXIT; YILE GUO; ZOE ANTONIOU: "Resource Management and Quality of Service in Third-Generation Wireless Networks" IEEE COMMUNICATIONS MAGAZINE, IEEE SERVICE CENTER, PISCATAWAY, US, vol. 39, no. 2, 1 February 2001 (2001-02-01), pages 125-133, XP011091427 ISSN: 0163-6804**

EP 2 154 837 B1

**Description**

Field of the invention

The present invention lies in the field of mobile communications, and more specifically in providing a set of techniques to manage congestion in the lub interface in UTRAN networks according to priority information.

Background of the invention

In a mobile telecommunication system, several interfaces are defined to interconnect the different nodes of the system. In the case of the UMTS standards, the lub interface is defined to interconnect the Radio Network Controller (RNC) and the Nodes B (the Base Transceiver Station in UMTS).

UTRAN (UMTS Terrestrial Radio Access Network) is a collective term for the network elements (e.g. Nodes B and RNCs) which make up the UMTS radio access network. This communications network, commonly referred to as 3G (for 3rd Generation Wireless Mobile Communication Technology), can carry many traffic types from real-time Circuit Switched to IP based Packet Switched. The UTRAN allows connectivity between the UE (User Equipment) and the core network. The UTRAN contains the base stations, which are called Nodes B, and RNCs. The RNC provides control functionalities for one or more Node B. A Node B and an RNC can be the same device, although typical implementations have a separate RNC located in a central office serving multiple Nodes B. Despite the fact that they do not have to be physically separated, there is a logical interface between them known as the lub interface. The RNC and its corresponding Nodes B are called the Radio Network Subsystem (RNS). There can be more than one RNS present in an UTRAN.

There are four interfaces connecting the UTRAN internally or externally to other functional entities: lu, Uu, lub and lur. The lu interface is an external interface that connects the RNC to the Core Network (CN). The Uu is also external, connecting the Node B with the User Equipment (UE). The lub is an internal interface connecting the RNC with the Node B. And at last there is the lur interface which is an internal interface most of the time, but can, exceptionally be an external interface too for some network architectures. The lur connects two RNCs with each other.

lub bandwidth is one of the main bottlenecks in UTRAN network. Due to unpredictable data traffic pattern in cell, congestion is unavoidable and all admitted users cannot be satisfied with the normal agreed services for a given percentage of time because of an overload.

When an overload situation is detected, congestion mechanisms impact all users independently of their priority.

Within the 3G networks, the necessity of having different priorities for customers and applications is increasing due to the high traffic demand.

The use of QoS (Quality of Service) attributes defined per user and APN (Access Point Name) in the HLR (Home Location Register) allows to differentiate users through different RRM (Radio Resource Management) algorithms:

In the 3GPP standards, there are 2 attributes defined to have different priorities for different packet sessions:

-    ARP (Allocation Retention Priority) allows user differentiation in Call Admission Control (CAC) pre-emption algorithms. This attribute applies to all TC (Traffic Class). Three possible values can be defined in the HLR.
-    THP (Traffic Handling Priority) allows user differentiation in scheduler. This attribute applies to Interactive TC. Also three possible values can be defined in the HLR.

To guarantee differentiation also in lub and lur, it is necessary to include these two parameters in congestion control algorithms.

EP 1770918 relates to a traffic shaping method for the downlink in internal interfaces. It ensures that the capacity of the lub interface is not exceeded (i.e. congestion is to be avoided) and that the end-user data rate remains acceptable. It does so by firstly detecting congestion situations and then applying restrictions on the radio interface (the connections between UEs and the base station) that feed into the congested interface.

In a review article entitled "Resource Management and Quality of Service in Third-Generation Wireless Networks", by Sudhir Dixit et al. (IEEE Communications Magazine, February 2001) quality of service is explained in terms of satisfying the quality required by different bearer services that combine to deliver the end to end service experienced by customers.

EP 1771023 also relates to radio resource management: it is concerned with the conventional use of ARP information elements in assigning priorities for services to users in the management of radio resource.

EP 1331768 relates to a rate control system which allows user throughput reduction to be implemented at least in part according to the priority class.

The present invention achieves user prioritization through the entire access network in case of congestion.

## Summary of the invention

The invention relates to a method for reducing the congestion in the internal interfaces (i.e. Iub and Iur) in UTRAN networks according to user prioritization according to claim 1 and a network element (e.g. Node B or RNC) for reducing the congestion in an internal interface in UTRAN networks according to user prioritization. Preferred embodiments of the method and network element are defined in the dependent claims.

In accordance with one aspect of the invention there is provided a method for reducing the congestion in an internal interface in a UTRAN network comprising:

- detecting a congestion situation in the internal interface;
- when said congestion situation has been detected, reducing the bit rate of users according to their priority, said priority being established according to the values of the Allocation Retention Priority, ARP, and the Traffic Handling Priority, THP, parameters stored in the HLR for each user and APN.

The method preferably further includes:

- detecting an absence of said congestion situation;
- when said absence of congestion situation has been detected, increasing the bit rate of users according to their priority, said priority being established according to the values of their ARP and THP parameters.

The congestion situation in the internal interface is preferably detected whenever the interface occupancy exceeds a congestion control activation threshold, whereas the absence of congestion situation in the internal interface is preferably detected whenever the interface occupancy goes below a congestion control deactivation threshold.

The method can comprise, in a preferred embodiment, when the congestion situation has been detected, sending the node B to the RNC credits for each user proportional to a priority weight $SPI\_Weight\_User$ for each user obtained from ARP and THP parameters.

The credits of each user j, $Credits\ User_j$, can be calculated according to the following formula:

$$CreditsUser_j = \frac{SPI\_Weight\_User_j}{\sum\limits_{K} SPI\_WeightK \times Number\_UsersK} \bullet MaxBW$$

where $SPI\_Weight\_User_j$ is the priority weight for the user j, the denominator is the calculation of the total Weights of all the users (adding the number of users of every priority K multiplied by the Weight of the priority K), and

$$MaxBW = CurrentUsedBW - MarginDecreasedBW$$

where MarginDecreasedBW is a configurable parameter to reduce the maximum BW used in case of congestion.

The method may alternatively comprise:

- defining a minimum bit rate per user priority;
- when the congestion situation has been detected, reducing first the bit rate of the users with lower priority to their corresponding minimum bit rate and continuing reducing the bit rate of the users with higher priority to their corresponding minimum bit rate till the congestion situation remains;

In addition, when the absence of congestion situation has been detected, method may further comprise increasing first the bit rate of the users with higher priority to their service bit rate and continuing increasing the bit rate of the users with lower priority to their corresponding service bit rate till the absence of congestion situation remains.

In accordance with a further aspect of the invention there is provided a network element for reducing the congestion in an internal interface in UTRAN networks, the element characterized in that it comprises:

a congestion detector which in use detects congestion situations in the internal interface; and
a bit rate controller which is operable to reduce the bit rate of users according to their priority when a congestion situation has been detected, said priority being established according to the values of the Allocation Retention Priority, ARP, and the Traffic Handling Priority, THP, parameters stored in the HLR for each user.

The congestion detector may further, in use, detect an absence of a congestion situation; and increase the bit rate of users according to their priority when said absence of congestion situation has been detected, said priority being established according to the values of the ARP and THP parameters stored in the HLR for each user.

Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

Figure 1 represents a block diagram with the elements from a UTRAN network in the scope of the invention: RNC, Node B, UE, lub and lur interfaces.
Figure 2 shows the congestion indication for the Uplink.
Figure 3 shows the different steps of a control flow method.
Figure 4 shows the thresholds to activate and deactivate the flow control algorithm.

Detailed description of the preferred embodiments

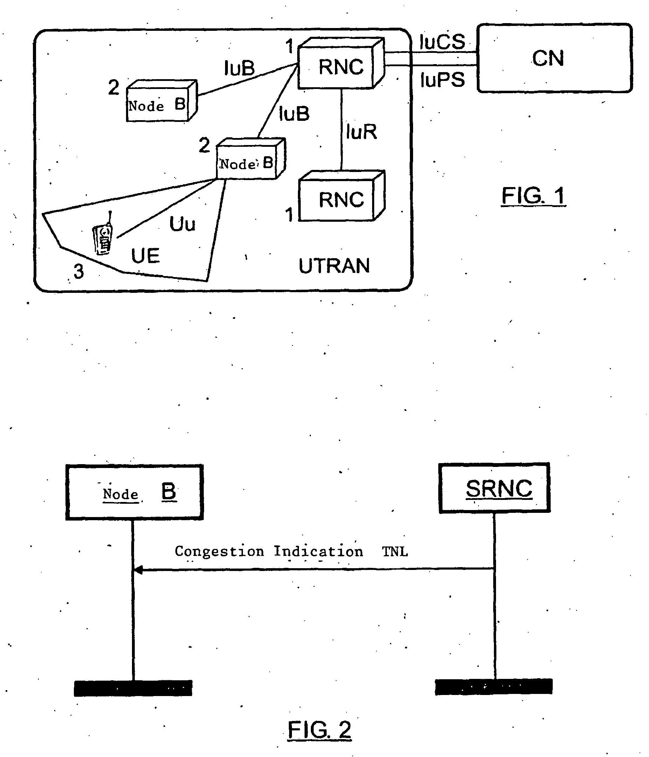

Figure 1 shows schematically the different elements of a UTRAN network in which the present invention is implemented: RNC 1, Node B 2 and UE 3.
The detection of the congestion is explained in the Technical Report TR 25.902 included in 3GPP Release 6 Technical Specifications (TS). Congestion in UTRAN networks is detected in uplink (UL) or downlink (DL).
There are many types of congestion detection mechanisms, the main groups are window based, rate based or combination of both. The method often used for congestion detection is the method based on the loss of packets. Other methods appropriate for congestion detection are: packet delay, average queue and rate difference.
Different congestion detection algorithms might be used for IP network and ATM network respectively.

Uplink (UL):

The Node B scheduler decides on when and with which bit rate each every UE is allowed to transmit in the cell. Each received MAC-e PDU (Protocol Data Unit) is placed in a frame protocol data frame and sent to the SRNC (Serving Radio Network Controller) - in some cases several PDUs are bundled into the same data frame. For each data frame, the Node B attaches the following information:

- A reference time, that gives an indication on when the frame was sent.
- A sequence number that gives an indication on which frame this is in relation to other data frames.

At the reception of the data frames the SRNC can do the following:

With the use of the reference time, the SRNC can compare the relative reception time with the relative transmission time (the reference time included in the data frame). With that information the SRNC can detect if there is a delay build-up in the transmission path. A delay build-up is an indication on that frames are being queued due to overload in the transport network.

- With the use of the sequence number, the SRNC can detect a frame loss. A frame loss is an indication that packets have been lost in the transport network due to overload reasons.

Figure 2 shows the procedure used by the SRNC to signal, on a transport bearer carrying an E-DCH MAC-d flow, that a transport network congestion situation on lub/lur has been detected is described in 3GPP TS 25.427.

• Downlink (DL): Explained in 3GPP TS 25.435 (Technical Specification).

HSDPA flow control can be used to detect congestion. The protocols responsible for carrying the payload between an RNC 1 and a Node B 2 are described in 3GPP TS 25.435 and TS 25.427 for common (i.e. shared) and dedicated channels respectively.

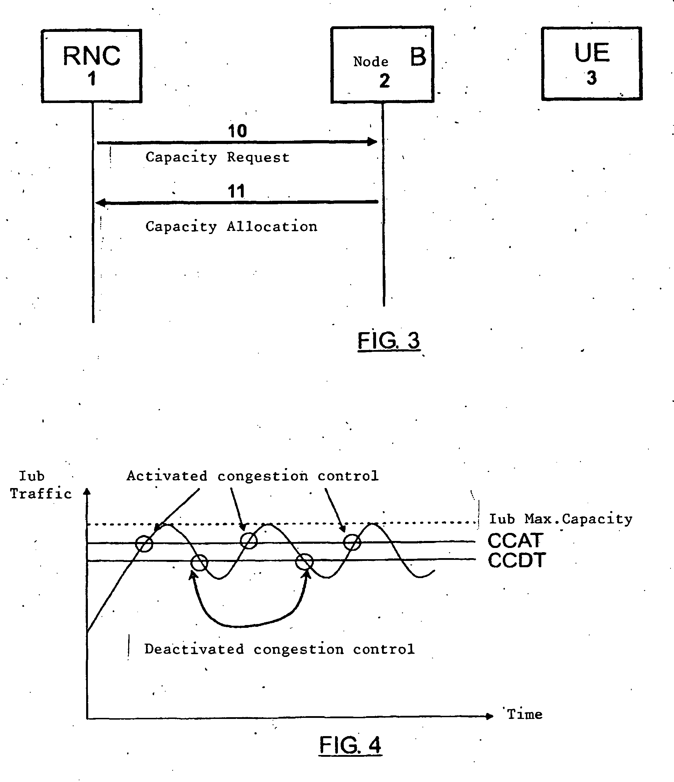

Part of the HSDPA (High Speed Downlink Packet Access) implementation is the flow control between RNC 1 and Node B 2 to control the flow in the lub interface. **Figure 3** illustrates how the algorithm performs.

This flow control method is done per user.

The HS-DSCH (High-Speed Downlink Shared Channel) Capacity Request procedure (10) provides means for the RNC to request HS-DSCH capacity by indicating the user buffer size in the RNC for a given priority level.

The RNC is allowed to reissue the HS-DSCH Capacity Request if no Capacity Allocation has been received within an appropriate time threshold.

HS-DSCH Capacity Allocation procedure (11) is generated within the Node B. It may be generated either in response to a HS-DSCH Capacity Request or at any other time.

The Node B may use this message to modify the capacity at any time, irrespective of the reported user buffer status.

The HS-DSCH Capacity Allocation frame is used by the Node B to control the user data flow. HS-DSCH Credits IE indicates the number of MAC-d PDUs that the CRNC (Controlling Radio Network Controller) is allowed to transmit for the MAC-d flow and the associated priority level indicated by the Common Transport Channel Priority Indicator IE.

The Maximum MAC- d PDU length, HS-DSCH Credits, HS-DSCH Interval and HS-DSCH Repetition Period IEs indicates the total amount of capacity granted. Any capacity previously granted is replaced.

If HS-DSCH Credits IE = 0 (e.g. due to congestion in the Node B), the CRNC shall immediately stop transmission of MAC-d PDUs. If HS-DSCH Credits IE = 2047, the CRNC can transmit MAC-d PDUs with unlimited capacity.

The IEs used in the HS-DSCH CAPACITY ALLOCATION Control Frame are the Common Transport Channel Priority Indicator, HS-DSCH Credits, Maximum MAC- d PDU Length, HS-DSCH Interval and the HS-DSCH Repetition Period.

If the HS-DSCH Repetition Period IE = "unlimited repetition period" it indicates that the CRNC may transmit the specified number of MAC-d PDUs for an unlimited period according to the bounds of Maximum MAC-d PDU Length, HS-DSCH Credits and HS-DSCH Interval IEs.

*Congestion Status* Bits are used by the Node B to indicate whether a congestion situation is detected in a DL transport network layer or not. The Node B provides the congestion status in every HS-DSCH Capacity Allocation Control Frame, which the RNC may use.

The flow control algorithm itself is not standardized; each vendor can implement its own algorithm.

When congestion in lub/lur interface is detected (in UL or DL) the bit rate is normally reduced to avoid congestion (In UL the Node B 2 reduces the bit rate of the users and in DL the Node B 2 that has detected the congestion sends Congestion Status bits to the RNC decreasing the bit rate of users in DL). When there is "no congestion" the system goes back to normal operation.

The congestion situation in the lub/lur interface can be considered when the lub/lur occupancy exceeds a congestion control activation threshold (CCAT), according to **Figure 4.** The absence of congestion situation ("no congestion" situation) in the lub interface can be considered when the lub/lur occupancy goes below a flow control deactivation threshold (CCDT).

Therefore, when congestion is detected the bit rate can be reduced using different algorithms. The present invention proposes including the QoS priority parameters ARP and THP as applied in the scheduler and CAC/preemption mechanisms in order to give the same QoS differentiation behaviour in case of radio or lub congestion.

Including ARP and THP parameters in the congestion control algorithm, when overload situation is detected user throughput could.be reduced depending on their priority by a factor and/or after that user throughput should be increased depending on their priority.

This congestion control mechanism including differentiation parameters improves user quality of service depending on the priority defined in the HLR and ensures same behaviour through all UTRAN network independently of the bottleneck.

ARP (Allocation retention priority) and THP (Traffic Handling Priority) parameters are mapped to SPI (Scheduling Priority Indicator) parameter, in the RNC. SPI indicates the relative priority of the HS-DSCH or E-DCH data frame and has sixteen possible values (as defined in the standards). It is also possible to map the SPI to a SPI weight indicating the relative importance of one user respect to the other.

When congestion is detected, Node B reduces the bit rate of users according to their priority (SPI or SPI weight) and when congestion has finished the bit rate of the users is increased according to their priority (SPI or SPI weight).

There are different ways to implement this algorithm:

The next examples are focused in three priorities: Low, medium and high; but more number of priorities can be implemented.

o <u>Example 1:</u>

It is possible to define a minimum bit rate per user priority.

In this case when congestion is detected, the bit rate of Low priority users is reduced till they get their minimum bit rate, if congestion still remains the process continues reducing the bit rate of the medium priority users to their minimum bit rate and only if congestion remains the High priority users will suffer bit rate reduction.

When notification of "no congestion" is received, the high priority users increase the throughput first; then, if there is still no congestion, the medium priority; and then the last users increasing throughput are the low priority users.

o <u>Example 2:</u>

When congestion is detected the bit rate of the users can be adapted by the node B 2 sending credits in capacity allocation procedure to RNC 1 taking into account user priority.

The number of credits is proportional to SPI weight (Scheduling priority indicator), mapped from ARP and THP parameters stored in the HLR for each user:

$$ARP, THP \to SPI \to SPI\ weight$$

SPI has 16 possible values (from 0 to 15) and it is the result of a combination of ARP and THP.

When the Node B detects the packet drop or packets delay, it can calculate the maximum BW for HSDPA, being:

$$MaxBW = CurrentUsedBW - MarginDecreasedBW$$

*MarginDecreasedBW* is a configurable parameter to reduce the maximum BW used in case of congestion. If the congestion is still in the network, in the next calculation, the MaxBW is again reduced with the *MarginDecreasedBW* parameter.

Then, this *MaxBW* is shared among all the active users according to the *SPIweight:*

$$CreditsUser_j = \frac{SPI\_Weight\_User_j}{\sum_K SPI\_WeightK \times Number\_UsersK} \bullet MaxBW$$

With this formula every user receives the amount of credits according to its priority weight.

**Claims**

1. Method for reducing the congestion in an internal interface in UTRAN networks, wherein <u>the internal interface comprises at least one of an</u> lub interface and an lur interface, and the method comprises:

   - detecting a congestion situation in the internal interface; **characterized in that**
   - when said congestion situation has been detected, the method comprises reducing the bit rate of users according to their priority, said priority being established according to the values of the Allocation Retention Priority, ARP, and the Traffic Handling Priority, THP, parameters stored in the HLR for each user.

2. Method according to claim 1, **characterized in that** the congestion situation in the internal interface is detected whenever interface occupancy exceeds a congestion control activation threshold (CCAT).

3. Method according to claim 1 or claim 2, further comprising:

   - detecting an absence of said congestion situation; and
   - when said absence of congestion situation has been detected, increasing the bit rate of users according to their priority, said priority being established according to the values of the ARP and THP parameters stored in the HLR for each user.

4. Method according to claim 3, **characterized in that** the absence of congestion situation in the internal interface is detected whenever the interface occupancy goes below a congestion control deactivation threshold (CCDT).

5. Method according to any of claims 1-4, **characterized in that** it comprises, when the congestion situation has been detected, sending credits from the node B (2) to the RNC (1) for each user proportional to a priority weight *SPI_Weight_User* for each user obtained from ARP and THP parameters.

6. Method according to claim 5, **characterized in that** the credits of each user j, *CreditsUser_j*, are calculated according to the following formula:

$$CreditsUser_j = \frac{SPI\_Weight\_User_j}{\sum_K SPI\_WeightK \times Number\_UsersK} \bullet MaxBW$$

where *SPI_Weight_User_j* is the priority weight for the user j, the denominator is the calculation of the total Weights of all the users, and

$$MaxBW = CurrentUsedBW - MarginDecreasedBW$$

where MarginDecreasedBW is a configurable parameter to reduce the maximum BW used in case of congestion.

7. Method according to any one of claims 1-4, **characterized in that** it comprises:

   - defining a minimum bit rate per user priority; and
   - when the congestion situation has been detected, reducing first the bit rate of the users with lower priority to their corresponding minimum bit rate and continuing reducing the bit rate of the users with higher priority to their corresponding minimum bit rate till the congestion situation remains.

8. Method according to claim 3 or claim 4, **characterized in that** it comprises:

   - when the absence of congestion situation has been detected, increasing first the bit rate of the users with higher priority to their service bit rate and continuing increasing the bit rate of the users with lower priority to their corresponding service bit rate till the absence of congestion situation remains.

9. A network element for reducing the congestion in an internal interface in UTRAN networks, wherein the internal interface comprises at least one of an lub interface and an lur interface, and the network element comprises:

   a congestion detector which in use detects congestion situations in the internal interface; the network element being **characterized in that** it comprises
   a bit rate controller which is operable to reduce the bit rate of users according to their priority when a congestion situation has been detected, said priority being established according to the values of the Allocation Retention Priority, ARP, and the Traffic Handling Priority, THP, parameters stored in the HLR for each user.

10. A network element according to claim 9, **characterized in that** the congestion detector identifies a congestion situation in the internal interface whenever the interface occupancy exceeds a congestion control activation threshold (CCAT).

11. A network element according to claim 9 or claim 10, wherein the congestion detector is, in use, further capable of detecting an absence of a congestion situation; and wherein the bit rate controller is operable to increase the bit rate of users according to their priority when said absence of congestion situation has been detected, said priority being established according to the values of the ARP and THP parameters stored in the HLR for each user.

12. A network element according to claim 11, **characterized in that** the congestion detector identifies the absence of congestion situation in the internal interface whenever the interface occupancy goes below a congestion control deactivation threshold (CCDT).

13. A network element according to any one of claims 9 to 12, wherein the bit rate controller is further operable to send credits to the RNC (1) for each user proportional to a priority weight *SPI_Weight_User* for each user obtained from ARP and THP parameters when the congestion situation has been detected.

14. A network element according to any one of claims 9 to 12, wherein the bit rate controller is further operable to define a minimum bit rate per user priority; and wherein, when the congestion situation has been detected, to reduce first the bit rate of the users with lower priority to their corresponding minimum bit rate and continuing reducing the bit rate of the users with higher priority to their corresponding minimum bit rate till the congestion situation remains;

15. A network element according to any one of claims 11 to 12, wherein, when the absence of congestion situation has been detected, the bit rate controller is further operable to increase first the bit rate of the users with higher priority to their service bit rate and continuing increasing the bit rate of the users with lower priority to their corresponding service bit rate till the absence of congestion situation remains

**Patentansprüche**

1. Verfahren zur Verringerung der Überlastung in einer internen Schnittstelle in UTRAN-Netzwerken, wobei die interne Schnittstelle zumindest eine Iub-Schnittstelle oder eine Iur-Schnittstelle umfasst und das Verfahren Folgendes umfasst:

   - Erfassen einer Überlastungssituation in der internen Schnittstelle, **dadurch gekennzeichnet, dass**
   - wenn die Überlastungssituation erfasst wurde, das Verfahren die Verringerung der Bitrate der Benutzer gemäß ihrer Priorität umfasst, wobei die Priorität entsprechend den Werten der Zuordnungsbeibehaltungspriorität (Allocation Retention Priority - ARP) festgelegt wird und die Parameter der Datenverkehrsabwicklungspriorität (Traffic Handling Priority - THP) für jeden Benutzer in der HLR gespeichert werden.

2. Verfahren nach Anspruch 1, **dadurch gekennzeichnet, dass** die Überlastungssituation in der internen Schnittstelle erfasst wird, wenn eine Schnittstellenbelegung eine Überlastungssteuerungsaktivierungsschwelle (Congestion Control Activation Threshold - CCAT) überschreitet.

3. Verfahren nach Anspruch 1 oder Anspruch 2, das ferner Folgendes umfasst:

   - Erfassen einer Abwesenheit der Überlastungssituation, und
   - wenn die Abwesenheit der Überlastungssituation erfasst wurde, Erhöhen der Bitrate der Benutzer gemäß ihrer Priorität umfasst, wobei die Priorität entsprechend den Werten der ARP festgelegt wird und die Parameter der THP für jeden Benutzer in der HLR gespeichert werden.

4. Verfahren nach Anspruch 3, **dadurch gekennzeichnet, dass** die Abwesenheit der Überlastungssituation in der internen Schnittstelle erfasst wird, wenn die Schnittstellenbelegung eine Überlastungssteuerungsdeaktivierungsschwelle (Congestion Control Deactivation Threshold - CCDT) unterschreitet.

5. Verfahren nach einem der Ansprüche 1 bis 4, **dadurch gekennzeichnet, dass** es Folgendes umfasst: wenn die Überlastungssituation erfasst wurde, Senden von Gutpunkten von Knoten B (2) zum RNC (1) für jeden Benutzer proportional zu einem Prioritätgewicht *SPI_Weight_User* für jeden Benutzer, das aus den ARP- und THP-Parametern erhalten wurde.

6. Verfahren nach Anspruch 5, **dadurch gekennzeichnet, dass** die Gutpunkte von jedem Benutzer j, *CreditsUser_j*, gemäß folgender Formel berechnet werden:

$$CreditsUser_j = \frac{SPI\_Weight\_User_j}{\sum_K SPI\_WeightK \times Number\_UsersK} \bullet MaxBW$$

wobei *SPI_Weight_User$_j$* das Prioritätsgewicht für den Benutzer j ist, der Nenner die Berechnung der Gesamtgewichte aller Benutzer ist und

$$MaxBW = CurrentUsedBW - MarginDecreasedBW$$

wobei MarginDecreasedBW ein konfigurierbarer Parameter ist, um den verwendeten maximalen BW-Wert im Fall einer Überlastung zu verringern.

7. Verfahren nach einem der Ansprüche 1-4, **dadurch gekennzeichnet, dass** es Folgendes umfasst:

   - Festlegung einer Mindest-Bitrate pro Benutzerpriorität, und
   - wenn die Überlastungssituation erfasst wurde, zunächst Verringern der Bitrate der Benutzer mit niedrigerer Priorität auf ihre entsprechende Mindest-Bitrate und fortfahren mit der Verringerung der Bitrate der Benutzer mit höherer Priorität auf ihre entsprechende Mindest-Bitrate, bis die Überlastungssituation bestehen bleibt.

8. Verfahren nach Anspruch 3 oder Anspruch 4, **dadurch gekennzeichnet, dass** es Folgendes umfasst:

   - wenn die Abwesenheit der Überlastungssituation erfasst wurde, zunächst Erhöhen der Bitrate der Benutzer mit höherer Priorität auf ihre Dienst-Bitrate und fortfahren mit der Erhöhung der Bitrate der Benutzer mit niedrigerer Priorität auf ihre Dienst-Bitrate, bis die Abwesenheit der Überlastungssituation bestehen bleibt.

9. Netzwerkelement zur Verringerung der Überlastung in einer internen Schnittstelle in UTRAN-Netzwerken, wobei die interne Schnittstelle zumindest eine Iub-Schnittstelle oder eine Iur-Schnittstelle umfasst und das Netzwerkelement Folgendes umfasst:

   einen Überlastungsdetektor, der bei Betrieb Überlastungssituationen in der internen Schnittstelle erfasst, wobei das Netzwerkelement **dadurch gekennzeichnet ist, dass** es Folgendes umfasst:

   eine Bitratensteuerung, die die Bitrate der Benutzer gemäß ihrer Priorität verringern kann, wenn eine Überlastungssituation erfasst wurde, wobei die Priorität entsprechend den Werten der Zuordnungsbeibehaltungspriorität (Allocation Retention Priority - ARP) festgelegt wird und die Parameter der Datenverkehrsabwicklungspriorität (Traffic Handling Priority - THP) für jeden Benutzer in der HLR gespeichert werden.

10. Netzwerkelement nach Anspruch 9, **dadurch gekennzeichnet, dass** der Überlastungsdetektor eine Überlastungssituation in der internen Schnittstelle erfasst, wenn die Schnittstellenbelegung eine Überlastungssteuerungsaktivierungsschwelle (Congestion Control Activation Threshold - CCAT) überschreitet.

11. Netzwerkelement nach Anspruch 9 oder Anspruch 10, wobei der Überlastungsdetektor bei Betrieb ferner eine Abwesenheit einer Überlastungssituation erfassen kann und wobei die Bitratensteuerung die Bitrate der Benutzer gemäß ihrer Priorität erhöhen kann, wenn die Abwesenheit der Überlastungssituation erfasst wurde, wobei die Priorität entsprechend den Werten der ARP- und THP-Parameter festgelegt wird, die für jeden Benutzer in der HLR gespeichert sind.

12. Netzwerkelement nach Anspruch 11, **dadurch gekennzeichnet, dass** der Überlastungsdetektor die Abwesenheit einer Überlastungssituation in der internen Schnittstelle erfasst, wenn die Schnittstellenbelegung eine Überlastungssteuerungsdeaktivierungsschwelle (Congestion Control Deactivation Threshold - CCDT) unterschreitet.

13. Netzwerkelement nach einem der Ansprüche 9 bis 12, wobei die Bitratensteuerung ferner Gutpunkte zum RNC (1) für jeden Benutzer proportional zu einem Prioritätsgewicht *SPI_Weight_User* für jeden Benutzer senden kann, das von ARP-und THP-Parametern erhalten wurde, wenn die Überlastungssituation erfasst wurde.

14. Netzwerkelement nach einem der Ansprüche 9 bis 12, wobei die Bitratensteuerung ferner für Folgendes ausgelegt ist: Definieren einer Mindest-Bitrate pro Benutzerpriorität, und wobei, wenn die Überlastungssituation erfasst wurde, zunächst Verringern der Bitrate der Benutzer mit niedrigerer Priorität auf ihre entsprechende Mindest-Bitrate und ferner Verringern der Bitrate der Benutzer mit höherer Priorität auf ihre entsprechende Mindest-Bitrate, bis die Überlastungssituation bestehen bleibt.

15. Netzwerkelement nach einem der Ansprüche 11 bis 12, wobei, wenn die Abwesenheit der Überlastungssituation erfasst wurde, die Bitratensteuerung ferner die Bitrate der Benutzer mit höherer Priorität auf ihre Dienst-Bitrate erhöhen kann und sie danach die Bitrate der Benutzer mit niedrigerer Priorität auf ihre Dienst-Bitrate erhöhen kann, bis die Abwesenheit der Überlastungssituation bestehen bleibt.

**Revendications**

1. Procédé de réduction de la congestion dans une interface interne dans les réseaux UTRAN, l'interface interne comprenant au moins l'une d'une interface Iub et d'une interface Iur, et le procédé comprenant :

   - la détection d'une situation de congestion dans l'interface interne ; **caractérisé en ce que**
   - quand ladite situation de congestion a été détectée, le procédé comprend la réduction du débit binaire des utilisateurs en fonction de leur priorité, ladite priorité étant établie en fonction des valeurs de la Priorité de Retenue d'Attribution, ARP, et des paramètres de Priorité de Prise en Charge du Trafic, THP, mémorisés dans le HLR pour chaque utilisateur.

2. Procédé selon la revendication 1, **caractérisé en ce que** la situation de congestion dans l'interface interne est détectée chaque fois que l'occupation d'interface dépasse un seuil d'activation de commande de congestion (CCAT).

3. Procédé selon la revendication 1 ou la revendication 2, comprenant en outre :

   - la détection d'une absence de ladite situation de congestion ; et
   - quand ladite absence de situation de congestion a été détectée, l'augmentation du débit binaire des utilisateurs en fonction de leur priorité, ladite priorité étant établie en fonction des valeurs des paramètres ARP et THP mémorisés dans le HLR pour chaque utilisateur.

4. Procédé selon la revendication 3, **caractérisé en ce que** l'absence de situation de congestion dans l'interface interne est détectée chaque fois que l'occupation d'interface est inférieure à un seuil de désactivation de commande de congestion (CCDT).

5. Procédé selon l'une quelconque des revendications 1 à 4, **caractérisé en ce qu'**il comprend, quand la situation de congestion a été détectée, l'envoi de crédits par le noeud B (2) au RNC (1) pour chaque utilisateur proportionnellement à une pondération de priorité $SPI\_Weight\_User$ pour chaque utilisateur obtenue à partir des paramètres ARP et THP.

6. Procédé selon la revendication 5, **caractérisé en ce que** les crédits de chaque utilisateur j, $Credits\ User_j$, sont calculés selon la formule suivante :

$$CreditsUser_j = \frac{SPI\_Weight\_User_j}{\sum\limits_{K} SPI\_WeightK \times Number\_UsersK} \bullet MaxBW$$

où $SPI\_Weight\_User_j$ est la pondération de priorité de l'utilisateur j, le dénominateur est le calcul des Pondérations totales de tous les utilisateurs, et

$$MaxBW = CurrentUsedBW - MarginDecreasedBW$$

où MarginDecreasedBW est un paramètre configurable pour réduire la largeur de bande maximum utilisée en cas de congestion.

**7.** Procédé selon l'une quelconque des revendications 1 à 4, **caractérisé en ce qu'**il comprend :

- la définition d'un débit binaire minimum par priorité d'utilisateur ; et
- quand la situation de congestion a été détectée, la réduction en premier lieu du débit binaire des utilisateurs d'une priorité inférieure à leur débit binaire minimum correspondant puis la réduction du débit binaire des utilisateurs d'une priorité supérieure à leur débit binaire minimum correspondant tant que la situation de congestion persiste.

**8.** Procédé selon la revendication 3 ou la revendication 4, **caractérisé en ce qu'**il comprend :

- quand l'absence de situation de congestion a été détectée, l'augmentation en premier lieu du débit binaire des utilisateurs d'une priorité supérieure à leur débit binaire de service puis l'augmentation du débit binaire des utilisateurs d'une priorité inférieure à leur débit binaire de service correspondant tant que l'absence de situation de congestion persiste.

**9.** Elément de réseau destiné à réduire la congestion dans une interface interne dans les réseaux UTRAN, l'interface interne comprenant au moins l'une d'une interface lub et d'une interface lur, et l'élément de réseau comprenant :

un détecteur de congestion qui en service détecte des situations de congestion dans l'interface interne ; l'élément de réseau étant **caractérisé en ce qu'**il comprend
un contrôleur de débit binaire exploitable pour réduire le débit binaire des utilisateurs en fonction de leur priorité quand une situation de congestion a été détectée, ladite priorité étant établie en fonction des valeurs de la Priorité de Retenue d'Attribution, ARP, et des paramètres de Priorité de Prise en Charge du Trafic, THP, mémorisés dans le HLR pour chaque utilisateur.

**10.** Elément de réseau selon la revendication 9, **caractérisé en ce que** le détecteur de congestion identifie une situation de congestion dans l'interface interne chaque fois que l'occupation d'interface dépasse un seuil d'activation de commande de congestion (CCAT).

**11.** Elément de réseau selon la revendication 9 ou la revendication 10, dans lequel le détecteur de congestion est en outre en mesure, en service, de détecter une absence de situation de congestion ; et dans lequel le contrôleur de débit binaire est exploitable pour augmenter le débit binaire des utilisateurs en fonction de leur priorité quand ladite absence de situation de congestion a été détectée, ladite priorité étant établie en fonction des valeurs des paramètres ARP et THP mémorisés dans le HLR pour chaque utilisateur.

**12.** Elément de réseau selon la revendication 11, **caractérisé en ce que** le détecteur de congestion identifie l'absence de situation de congestion dans l'interface interne chaque fois que l'occupation d'interface est inférieure à un seuil de désactivation de commande de congestion (CCDT).

**13.** Elément de réseau selon l'une quelconque des revendications 9 à 12, dans lequel le contrôleur de débit binaire est exploitable en outre pour envoyer des crédits au RNC (1) pour chaque utilisateur proportionnellement à une pondération de priorité *SPI_Weight_User* pour chaque utilisateur obtenue à partir des paramètres ARP et THP quand la situation de congestion a été détectée.

**14.** Elément de réseau selon l'une quelconque des revendications 9 à 12, dans lequel le contrôleur de débit binaire est exploitable en outre pour définir un débit binaire minimum par priorité d'utilisateur ; et dans lequel, quand la situation de congestion a été détectée, réduire en premier lieu le débit binaire des utilisateurs d'une priorité inférieure à leur débit binaire minimum correspondant puis réduire le débit binaire des utilisateurs d'une priorité supérieure à leur débit binaire minimum correspondant tant que la situation de congestion persiste.

**15.** Elément de réseau selon l'une quelconque des revendications 11 à 12, dans lequel, quand l'absence de situation de congestion a été détectée, le contrôleur de débit binaire est exploitable en outre pour augmenter en premier lieu le débit binaire des utilisateurs d'une priorité supérieure à leur débit binaire de service puis augmenter le débit binaire des utilisateurs d'une priorité inférieure à leur débit binaire de service correspondant tant que l'absence de situation de congestion persiste.

FIG. 1

FIG. 2

RNC
1

Node B
2

UE
3

10
Capacity Request

11
Capacity Allocation

FIG. 3

Iub
Traffic

Activated congestion control

Iub Max.Capacity

CCAT
CCDT

Deactivated congestion control

Time

FIG. 4

**REFERENCES CITED IN THE DESCRIPTION**

**Patent documents cited in the description**

- EP 1770918 A
- EP 1771023 A

- EP 1331768 A

**Non-patent literature cited in the description**

- **SUDHIR DIXIT et al.** Resource Management and Quality of Service in Third-Generation Wireless Networks. *IEEE Communications Magazine,* February 2001